Europäisches Patentamt

European Patent Office

Office européen des brevets

(11) Publication number: **0 205 596 B1**

# EUROPEAN PATENT SPECIFICATION

(45) Date of publication of patent specification: **19.02.92**  (51) Int. Cl.⁵: **F04B 49/00**, H02H 7/08

(21) Application number: **86900576.9**

(22) Date of filing: **24.12.85**

(86) International application number:
**PCT/US85/02576**

(87) International publication number:
**WO 86/04119 (17.07.86 86/17)**

(54) **PUMP CONTROL APPARATUS AND METHOD.**

(30) Priority: **31.12.84 US 688037**

(43) Date of publication of application:
**30.12.86 Bulletin 86/52**

(45) Publication of the grant of the patent:
**19.02.92 Bulletin 92/08**

(84) Designated Contracting States:
**DE FR GB IT SE**

(56) References cited:

| | |
|---|---|
| JP-A- 5 572 678 | US-A- 3 283 236 |
| US-A- 3 717 420 | US-A- 3 776 661 |
| US-A- 3 858 102 | US-A- 3 953 777 |
| US-A- 4 021 700 | US-A- 4 195 968 |
| US-A- 4 241 299 | US-A- 4 311 438 |
| US-A- 4 412 162 | US-A- 4 420 787 |

(73) Proprietor: **RULE INDUSTRIES, INC.**
**Cape Ann Industrial Park**
**Gloucester, MA 01930(US)**

(72) Inventor: **ANASTOS, William, N.**
**28 Longmeadow Road**
**Belmont, MA 02178(US)**
Inventor: **BOYD, Stephen, B.**
**424 Massachusetts Avenue**
**Arlington, MA 02174(US)**

(74) Representative: **Attfield, Donald James et al**
**BROOKES, MARTIN & WILSON Prudential**
**Buildings 5 St. Philip's Place**
**Birmingham B3 2AF(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

The present invention relates broadly to an apparatus and method for controlling electrically powered pumps for liquids and is more specifically concerned with an apparatus and method for controlling the operations of bilge or sump pumps.

In a typical bilge pump installation the pump, powered by a fractional horsepower d.c. electric motor, is located at a low point in the bilge of the vessel and is wired to an appropriate source of electric power therefor, such as a battery or, in the case of power boats having electrical power generating capacity, to the electrical system of the boat. While control of the operation of such a pump may be undertaken manually, such as by the installation of a manually operated switch in the power supply circuit to the pump motor, it is usually desired that the pump be controlled automatically in response to water level changes in the bilge. To this end, various float switches are conventionally employed to control bilge pump operations, said switches broadly comprising a fixed base member and a float member which is usually, but not universally, pivotally attached to the base member. The float member carries a switching element, such as a mercury capsule, which is wired in series into the power supply circuit to the pump motor and which is responsive to the position of the float member relative to the base member. Such float switch devices are necessarily located in the bilge. In consequence of this arrangement, the switching element automatically makes or breaks the power supply circuit to the pump as a function of the position of the float member relative to the base member. Unfortunately, the bilges of vessels are normally dirty and often include chemicals such as cleansers, oils and greases as well as such solid particulates and fibrous adulterants as sand, grit, shells, fish scales, cordage, fishing line, paper and the like. Accordingly, the typical bilge environment is extremely hostile to long term good operations of float switches which depend for their effectiveness upon the maintenance of free motion between the float member and the fixed base member.

Another pump control system which has been attempted to be utilized in the automatic control of bilge pumps comprises a pair of electrically conductive low and high water sensing probes which are appropriately positioned in the bilge, said probes being wired, through appropriate circuitry, into the power supply circuit to the bilge pump. Such a bilge pump control system is described, for instance, in US-A-4,171,932. By suitable adjustment of the high and low water sensing probes within the bilge, the bilge water, at its high level, immerses both probes, thereby establishing a low resistance bridge therebetween and causing the closure of the pump motor power supply circuit. As the pump removes water from the bilge the water level therein decreases to the point where there is ultimately attained a condition wherein neither probe is continuously immersed in the bilge water. At this point both probes signal a high resistance condition and the power supply circuit to the pump motor is opened until such time as the accumulation of water in the bilge is again sufficient to immerse both probes. Again, however, this system depends upon immersion of the sensing probes in the bilge water, and because the bilge water is usually dirty, said probes can quickly become sufficiently fouled as to markedly alter their resistance sensing properties, thereby to adversely affect their desired pump control function.

Pump control apparatuses essentially similar to those broadly described above in reference to bilge pump control are also utilized in controlling sump pumps such as are conventionally employed to remove groundwater and seepage from foundations and cellars. Such pumps are normally driven by a.c. motors. Similar problems as those outlined above also attend sump pump control operations.

In US-A-4311438 there is disclosed an apparatus according to the preamble of claim 1 for controlling an intermittently operated pump comprising a running time gauge for measuring the running time of the pump from the last start thereof and start delay means coupled with the running time gauge for starting the pump with a variable time delay after the end of the running time, said time delay being dependant on a duration, measured by the running time gauge, of the preceeding running time such that a long running time gives a short pause time and a short running time gives a long pause time.

In accordance with the present invention there is provided a pump control apparatus according to claim 1 which may be connected at any convenient location along the pump motor power supply circuit and which apparatus may be located in its entirety outside the immediate environment of the liquid to be pumped.

There is also provided a novel pump/pump control system or combination wherein the pump control component is physically separate and remote from the pump component, or wherein the pump control component is physically integrated with the pump component.

SUMMARY OF THE INVENTION

In accordance with an essential portion of the invention use is made of an inherent phenomenon which occurs in the operation of those liquid pumps driven by a.c. or d.c. electric prime movers. More particularly, said phenomenon resides in the fact that a number of detectable changes in an electrical condition of the prime mover power supply circuit occur in a typical operating cycle of such a pump. Said electrical condition can be the voltage or amperage flowing through the pump motor power supply circuit. Upon closing of the circuit there usually occurs an initial transient surge of electricity therethrough which is of lower voltage and substantially higher amperage than that which attends the system during the major intermediate portion of the pumping cycle. As the pump system friction is overcome and the system fills and conveys its liquid burden to the discharge thereof, the voltage through the power supply circuit to the pump motor increases and the amperage substantially decreases to levels which thereafter remain relatively static during the major intermediate portion of the pumping cycle. In the final portion of the cycle, when the pump begins to starve for liquid due to liquid exhaustion from the sump or bilge from which the liquid is drawn by the pump, the pump motor begins to run free or approaches the "no-load" condition and the pump motor supply circuit voltage increases and the amperage decreases, relative to the voltage and amperage conditions existing during the major intermediate portion of the pumping cycle.

The pump control apparatus of the invention makes use of the above-described phenomenon and broadly comprises an interval timer effective to produce an output/"on" signal at a preselected constant time interval, an electrical condition sensing means for insertion in the pump motor power supply circuit and effective to produce an output "off" signal response to the electrical condition of the pump motor sensed upon liquid starvation of the pump, a switch for insertion into the pump motor supply circuit and a switch control circuit, said control circuit being responsive (a) to the output "on" signal of said interval timer to close said switch, and (b) to the "off" signal of said electrical condition sensing means to open said switch. In preferred embodiments of the invention, additional circuitry is provided to supply pump motor and power supply circuit protection in case of jamming of the pump and to delay activation of such protective circuitry during start up of the pumping cycle when there occurs transiently, but normally, an excessive upset of the electrical condition sensed by the electrical condition sensing means.

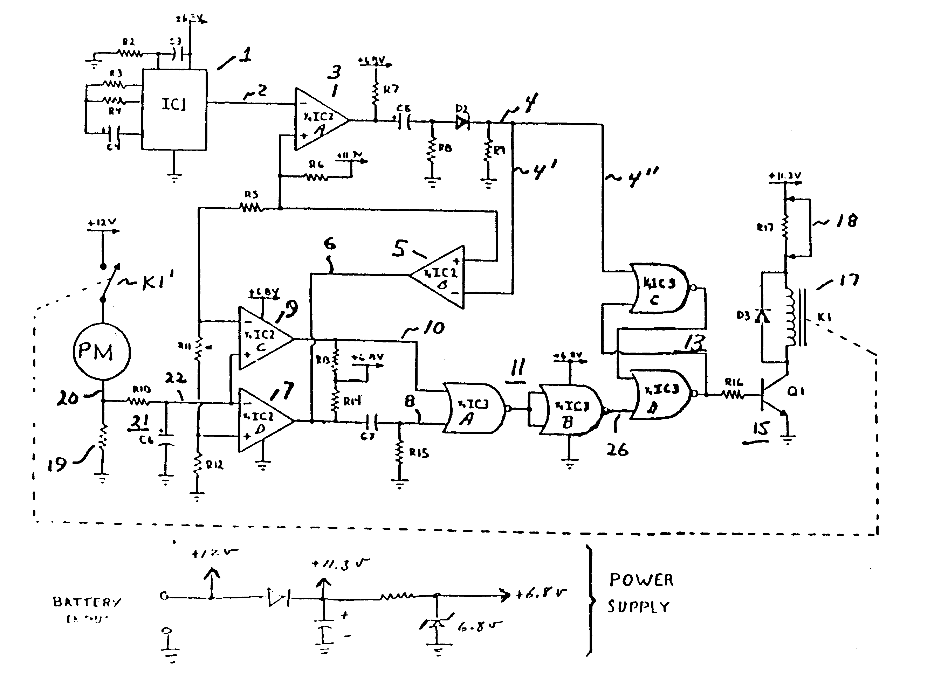

## BRIEF DESCRIPTION OF THE DRAWING

The invention will now be described in greater detail below, reference being made to the accompanying drawing which is a schematic circuit diagram embodying the teachings of the invention and including certain preferred embodiments thereof. Included in the drawing is a schematic circuit diagram disclosing a suitable power supply circuit for use with the depicted pump control apparatus.

## DESCRIPTION OF THE PREFERRED EMBODIMENTS

Referring now to the drawing, there is shown a fractional horsepower d.c. pump motor or prime mover (PM) having a conventional power supply circuit thereto. Control of pump operations is achieved by means of the depicted assemblage of the following major circuit stages: interval timer 1, inverter 3, clamp timer 5, RC buffer 21, undercurrent detector 7, overcurrent detector 9, two-input buffer 11, R-S flip-flop 13, relay driver 15 and switching relay stage 17.

Interval timer stage 1, composed of circuit elements IC1, R2-4, C3-4, produces a signal output count, through 2, which output is normally low. Accordingly, said signal output is injected into inverter stage 3, comprising circuit elements IC2A, R5-9, D2 and C5, whereby the output signal, at 4, is rendered high at start up. The timing of the intervals of the "on" signal output of the interval timer stage 1 is preselected and may be adjusted by appropriate selection of the values for circuit elements R3, R4 and C4. For bilge pump control operations it has been found that the provision of an "on" signal at intervals of about 5 minutes is usually adequate for most needs. The inverted "on" signal output of the inverter stage 3 is conducted through 4" to the set input of the R-S flip-flop stage 13, composed of circuit elements IC3C and IC3D, causing the output signal of said R-S flip-flop stage 13 to go high, thereby to trigger the relay driver stage 15 which is composed of circuit elements R16 and Q1 and to thereby cause closure of switching relay K1 of relay stage 17. Said relay stage 17 is composed of circuit elements K1 and D3. In the specific circuitry described hereinafter with respect to control of a 12 volt d.c. bilge pump, R17 is bridged, as shown, by means of a shunt 18. Where a 24 volt d.c. pump power supply circuit is involved, however, the shunt 18 is removed, placing R17 in circuit. The closure of relay K1 initiates the pumping cycle by closure of the mechanical switch elements K1' of relay K1, which elements K1' are in series connection in the power supply circuit of the pump motor PM.

The RC time constant generated by interval timer stage 1 through inverter stage 3 is conducted through 4' to the input of clamp timer stage 5, composed of circuit elements IC2B, R5, R6, R8, R9 and C5. The output of said clamp timer stage 5 is injected, through 6, into the output of the undercurrent detector stage 7 so as to briefly hold the undercurrent detector stage 7 output at zero volts from the time of the "on" signal output of interval timer stage 1. This is done in order to prevent the undercurrent detector stage 7 output from falsely signalling an undercurrent condition to the R-S flip-flop stage 13 during the period of time required for the mechanical elements K1' of relay K1 to effectuate closure of the power supply circuit to pump motor PM. The time interval at which the undercurrent detector stage 7 output is held to zero volts by the output of clamp timer stage 5 can be controlled by appropriate selection of values for circuit elements C5, R5, R6, R8 and/or R9. In general, this zero voltage output condition of the undercurrent detector stage 7 need not exceed about 2 seconds following the "on" signal of the interval timer stage 1 and can often be substantially shorter, say on the order of 1 second or even less.

An essential element of the control apparatus of the invention is an electrical condition sensing means adapted for insertion in the pump motor power supply circuit and which sensing means produces an output signal responsive to the electrical condition of the power supply circuit sensed thereby. As mentioned previously, amperage and voltage in the power supply circuit change at detectable levels in typical pump operations. Thus, any voltage or amperage sensing means whose output signal can be effectively modulated in response to these changes can be utilized in the present invention as the electrical condition sensing means. Current (amperage), however, is the preferred electrical condition for monitoring in the present invention because it is this electrical condition of the pump motor power supply circuit which tends to change most as a function of pump operating conditions during the course of a typical pumping cycle. For a representative fractional horsepower d.c. bilge pump of, say, 2500 gallons per hour pumping capacity (at open discharge), the peak start-up current in the power supply circuit may be in excess of 100 amperes, the normal current draw during the major intermediate portion of the pumping cycle may be about 12 amperes and the "no-load" pumping condition may give rise to a current draw of only about 2.5 amperes. Voltages, on the other hand, may vary over a relatively narrow range of, say one or two volts under these aforementioned conditions. Accordingly, it is preferred that the electrical condition sensing means employed in the present invention serve to sense the amperage or current in the pump motor power supply circuit and, to this end, there is shown as the electrical condition sensing element in the drawing hereof a sensor resistor element 19 located in series with the ground leg 20 of the pump motor power supply circuit. In accordance with Ohm's law, the voltage carried in ground leg 20 is dependent upon the current flowing through the sensor resistor element 19 and is utilized as the output signal to the undercurrent detector stage 7 and overcurrent detector stage 9. This signal, after passing through RC buffer stage 21, composed of circuit elements C6 and R10, is injected as an input signal, through 22, into the undercurrent and overcurrent detector stages 7 and 9. The RC buffer stage 21 serves to filter electrical noise from the signal prior to its injection into said detector stages 7 and 9 and to prevent the transient and normal overcurrent condition in the pump motor power supply circuit during the start up period of pump operations from falsely triggering the overcurrent detector stage 9 and thereby causing premature shutdown of the pump.

Undercurrent detector stage 7 is composed of circuit elements IC2D, R11, R12, R14, R15 and C7 and serves to compare the signal voltage through 22 to a set point reference voltage. It will be appreciated from the circuit diagram that the reference voltage will vary as a function of the power supply voltage to the prime mover which, in turn, will usually be dictated primarily by the condition of the prime mover power supply, such as a battery. This is a desirable feature of the control apparatus of the invention because the efficiency of a prime mover for an electrically driven pump is affected by the condition of the power supply therefor. Thus, by comparing the signal voltage of the sensor resistor 19, which is already in the power supply circuit of the pump, against a reference voltage whose value changes as a function of the condition of the prime mover power supply, there results an automatic compensation for power supply condition and the control apparatus tracks such power supply condition changes as normally occur in use with substantial accuracy. This benefit also obtains with respect to the overcurrent detector stage 9, which detector stage is described in more detail hereinafter. The nominal reference voltage set point is achieved by appropriate selection of values for circuit elements R5, R6, R11 and R12. When the signal voltage through 22 falls below the reference voltage supplied to the undercurrent detector stage 7, which condition occurs when the pump begins to run free due to exhaustion of liquid from the sump or bilge, the output signal of the undercurrent detector stage 7 goes high and this "off" signal is injected, through 8, into the two-input buffer stage 11, comprising circuit elements IC3A and IC3B, and thence through 26 into the reset input of RS flip-flop stage 13 which functions to arrest operation of the relay driver stage 15, thereby to cause opening of relay K1 and opening of the pump motor PM power supply circuit. The pump motor PM then remains inactivated until the occurrence of the next "on" signal output of the interval timer stage 1.

The overcurrent detector stage 9, composed of circuit elements IC2C, R5, R6 and R11-13, also receives the RC buffered signal voltage through 22 and compares said voltage against a selected set point reference voltage whose nominal value will be different from that for the reference voltage supplied to undercurrent detector stage 7. This set point reference voltage value is also dictated by appropriate selection of the values for circuit elements R5, R6, R11 and R12. When the input signal voltage through 22 rises above the set point reference voltage, which condition occurs when the pump becomes jammed or is otherwise impeded from free operation, the overcurrent detector stage 9 output goes high and is injected through 10, into the two-input buffer stage 11 and thence through 26 into the reset input of RS flip-flop stage 13. As in the case of the operation of the undercurrent detector stage 7, activation of the RS flip-flop stage 13 causes shutdown of relay driver stage 15 and opening of the relay K1. The pump motor PM thereafter remains inactivated until the occurence of the next "on" signal output of the interval timer stage 1 and, until the cause of the overcurrent condition is resolved, the control apparatus of the invention will simply repetitively close switch relay K1 at each such "on" signal and protectively open said switch relay K1 through the operation of the overcurrent detector stage 9.

Apparatus of the type described has been successfully fabricated and tested in a bilge pump system utilizing the following major circuit elements.

| | |
|---|---|
| D2 | IN 4148 |
| D3 | IN 4001 |
| IC1 | CD 4060B |
| IC2 | LM 339N |
| IC3 | CD 4001 |
| K1 | Potter & Brumfield #T90 |
| Q1 | PN2222A |
| 19 | 6 Inches #18 Gauge Copper Wire, Tinned |

It will be appreciated that the suffix reference letters appearing in the text and drawing hereof in respect of integrated circuit elements IC2 and IC3 refer to the fact that electronically different portions of the same physical integrated circuit unit are employed for separate and distinct electronic functions in the apparatus of the invention specifically described hereinabove.

The 12 volt d.c. powered bilge pump utilized in the system had a rated pumping capacity of 1500 gallons per hour at open discharge and the current characteristics thereof under the varying conditions attendant a normal pumping cycle and a stalled condition were determined to be as follows.

| | |
|---|---|
| Peak Start Up Current | 55 amperes |
| Pumping Load Current | 5.1 amperes |
| No-load Current | 1.7 amperes |
| Stall Current | 55 amperes |

Based upon these operating characteristics of the pump motor and taking into account the resistance characteristics of the sensor resistor 19 utilized as the electrical condition sensing means, the nominal reference voltage supplied to undercurrent detector stage 7 was selected and adjusted to 20 mV and the reference voltage supplied to overcurrent detector stage 9 was selected and adjusted to 80 mV. The current "spike" occuring during the start up of the motor was determined to exist for an interval of about 0.1 second; thus, the RC buffer stage 21 was adapted to prevent passage of the overcurrent signal for an interval of about 0.2 second. The time of closure of the switch elements K1' of relay K1 was determined to be on the order of about 3.5 milliseconds; accordingly, the values of elements R5, R6, R8, R9 and C5 of clamp timer stage 5 were selected so as to cause a zero volt output of undercurrent detector stage 7 for a period of about 1 second taken from the time of the generation of the "on" signal of interval timer stage 1. By appropriate selections of values for elements R3, R4 and C4, the interval timer stage 1 was set for a periodicity of the "on" signal of 5 minutes.

The above system was operated successfully and the control apparatus of the invention performed to control the level of bilge water in a simulated bilge over a range of leakage rates into the bilge which could reasonably be expected to occur during normal boating operations. When water was introduced into the bilge at a rate sufficient to maintain pumping throughout a 5 minute cycle period of the interval timer 1, the pump simply continued to operate under the influence of the signal generated by the electrical condition sensing means resistor 19 until such time as the bilge was essentially exhausted of its water burden and the pump motor began to run free. Then, the signal voltage from R19 fell to below the set point value of undercurrent detector stage 7, thereby resulting in opening of relay K1 and shuting down of pump operations until the next "on" signal of interval timer 1. When the pump was stalled by mechanically

EP 0 205 596 B1

jamming it, the overcurrent detector 9 operated to shut down operation well before any damage was done to the pump system or the control apparatus and, indeed, even before a protective fuse installed in the power supply circuit could operate to itself open the power supply circuit.

It should be noted that the pump control apparatus of the invention also serves to inherently and passively control the time of the inactive or "resting" period between pumping cycles. For instance, at a cycle time of "on" signals generated by the interval timer 1 of, say, 5 minutes, should the pump operate to exhaust the liquid supply within 1 minute of continuous operation the inactive period remaining before the next "on" signal will be 4 minutes. In the event that the leakage rate into the bilge or sump increases such as to cause the pump at the next cycle to operate for a longer period to exhaust the liquid therefrom, say for 2 minutes, the inactive period remaining before the next "on" signal is automatically and inherently shortened to 2 minutes. Accordingly, the resting period of a pump equipped with the apparatus of the invention is dictated and controlled by the next prior pumping cycle history of the system.

As mentioned previously, one of the advantages conferred by the arrangement of the present invention resides in the fact that that pump control apparatus hereof can be electrically connected to the pump prime mover power supply circuit at substantially any convenient point therealong. Thus, the pump control apparatus can be readily located so as to be physically isolated from the liquid environment of the sump or bilge in which the pump controlled thereby is to be operated. For example, in the case of bilge pumps, the pump control apparatus of the invention can be constructed and utilized as a separate and discrete component of the pump/pump control system and can be installed in the system so as to be physically remote from the bilge and the pump component of the system. On the other hand, it can also be found advantageous, and it is specifically contemplated herein, to physically co-locate the pump control component with the pump component and thereby provide a physically integrated pump/pump control system or combination. As an example of such an integrated pump/pump control embodiment, the prime mover casing of the pump can be provided with an integral well to receive the pump control component, said prime mover casing and said well being appropriately sealed so as to prevent entry of liquid thereinto and to thereby physically isolate the pump prime mover and the pump control component from the liquid environment of the bilge. The necessary electrical connections of the pump control component (including the power supply therefor) to the pump's prime mover power supply circuit can, of course, all be accomplished internally within the sealed pump prime mover casing and/or pump control receiving well.

Obviously, many changes can be made in the pump control apparatus of the invention specifically described above. For instance, while the foregoing description has disclosed specifics in the control of d.c. powered pumps, it is obvious that the apparatus of the invention can also be employed for control of the operations of a.c. powered pumps. In the latter instance, for example, the switch employed need not take the form of a relay but, instead, can take the form of a solid state switch such as a triac or SCR, thereby eliminating some complexity from the control apparatus of the invention.

**Claims**

1. Pump control apparatus comprising:-

   (a) a switch (K1¹) for insertion in the pump prime mover (PM) power supply circuit of an electrically driven pump for liquids;

   (b) an interval timer means (1) effective to produce an "on" signal at a pre-selected time interval;

   (c) means included in the power supply circuit of the said pump comprising an electrical condition sensing means (19) to monitor an electrical condition of the power supply circuit responsive to pumping load and to produce the "off" signal in response to a sensed change in said electrical condition of the pump prime mover upon liquid starvation of the pump, the power supply further including,

   (d) a switch control circuit (2, 4, 6, 8, 10, 20, 22, 26) communicating with each of (a), (b), and said electrical condition sensing means (19), said circuit being responsive to the "on" signal of said interval timer (1) of (b) to close said switch (K1¹) at each said time intervals and being responsive to the "off" signal of said electrical condition sensing means (19) to open said switch (K1¹),

   characterised in that said interval timer means (1) produces an "on" signal at a constant time interval regardless of whether or not the pump is operating at the time.

2. The pump control apparatus of Claim 1 wherein said electrical condition sensing means of (c) is a sensor resistor (19) and the electrical condition sensed thereby is current.

3. The pump control apparatus of Claim 2 wherein said switch control circuit of (d) includes an

6

undercurrent detector (7) to sense an undercurrent "off" signal of said sensor resistor (19) said undercurrent detector (7) being operative to open said switch (K1¹).

4. The pump control apparatus of Claim 2 wherein said switch control circuit of (d) includes an overcurrent detector (9) to sense an overcurrent signal of said resistor (19), said overcurrent detector (9) being operative to open said switch (K1¹).

5. The pump control apparatus of any one of Claims 2, 3 or 4 wherein said switch control circuit of (d) includes a buffer stage (21) to filter electrical noise from the signal output of said sensor resistor (19).

6. The pump control apparatus of Claim 3 wherein said switch is a relay (K1) having mechanical contact elements (K1¹) and said switch control circuit includes a clamp timer (5) adapted to temporarily delay operation of said undercurrent detector (7) for a period of time sufficient to allow the mechanical contact elements (K1¹) of said switch to make contact and to thereby close said power supply circuit of said pump (PM) following said "on" signal of said interval timer (1).

7. The pump control apparatus of Claim 3 wherein said undercurrent detector (7) compares a voltage signal from said sensor resistor (19) against a reference voltage supplied to said detector and wherein said reference voltage is a function of the condition of the prime mover power supply.

8. The pump control apparatus of Claim 4 wherein said overcurrent detector (9) compares a voltage signal from said sensor resistor (19) against a reference voltage supplied to said detector and wherein said reference voltage is a function of the condition of the prime mover power supply.

9. A pump/pump control apparatus comprising an electrically driven pump and the pump control apparatus of any one of claims 1 - 8 wherein the said pump control apparatus is a discreet component relative to the said pump and is located remotely therefrom.

10. A pump/pump control apparatus comprising an electrically driven pump and the pump control apparatus of any one of claims 1 - 8 wherein the said pump control apparatus of any one of claims 1 - 8 wherein the said pump control apparatus is physically integrated with the said pump.

11. A method for controlling electrically powered pump apparatus which comprises:
(a) closing the power supply circuit to the prime mover of said pump apparatus at a preselected time interval;
(b) monitoring an electrical condition of said power supply circuit throughout the pumping cycle of the pump, said electrical condition being responsive to the pumping load of the pump; and
(c) upon a change of said monitored electrical condition signalling a reduction in the pumping load and the onset of starvation of the pump, opening said power supply circuit;
characterised in that the said time interval is a constant time interval not related to the functioning of the said pump.

**Revendications**

1. Appareil de commande d'une pompe comprenant :
a) un commutateur (K1') destiné à être introduit dans le circuit d'alimentation de puissance d'un moteur de pompe (PM) d'une pompe à commande électrique pour liquides;
b) des moyens de minuterie d'intervalle (1) servant à produire un signal "marche" à un intervalle de temps présélectionné;
c) des moyens compris dans le circuit d'alimentation de puissance de la pompe et comprenant un dispositif de détection d'état électrique (19) pour surveiller un état électrique du circuit d'alimentation de puissance en réponse à la charge de pompage, et pour produire le signal "arrêt" en réponse à une variation détectée de l'état électrique du moteur de pompe lorsque la pompe manque de liquide, l'alimentation de puissance comprenant en outre,
d) un circuit de commande de commutateur (2, 4, 6, 8, 10, 20, 22, 26) communiquant avec chacun des éléments (a), (b), et avec le dispositif de détection d'état électrique (19), ce circuit répondant au signal "marche" de la minuterie d'intervalle (1) de (b) pour fermer le commutateur (K1') à chacun des intervalles de temps, et répondant au signal "arrêt" du dispositif de détection d'état électrique

EP 0 205 596 B1

(19) pour ouvrir le commutateur (K1'),

appareil caractérisé en ce que les moyens de minuterie d'intervalle (1) produisent un signal "marche" à un intervalle de temps constant sans se préoccuper de savoir si la pompe est en fonctionnement ou non à ce moment.

2. Appareil de commande d'une pompe selon la revendication 1, caractérisé en ce que le dispositif de détection d'état électrique de (c) est une résistance de détecteur (19), et en ce que l'état électrique ainsi détecté est l'intensité.

3. Appareil de commande d'une pompe selon la revendication 2, caractérisé en ce que le circuit de commande de commutateur de (d) comprend un détecteur de sous-intensité (7) destiné à détecter un signal "arrêt" de sous-intensité de la résistance de détecteur (19), ce détecteur de sous-intensité (7) servant à ouvrir le commutateur (K1').

4. Appareil de commande d'une pompe selon la revendication 2, caractérisé en ce que le circuit de commande de commutateur de (d) comprend un détecteur de surintensité (9) destiné à détecter un signal de surintensité de la résistance (19), ce détecteur de surintensité (9) servant à ouvrir le commutateur (K1').

5. Appareil de commande d'une pompe selon l'une quelconque des revendications 2 à 4, caractérisé en ce que le circuit de commande de commutateur de (d) comprend un étage tampon (21) destiné à filtrer le bruit électrique du signal de sortie de la résistance de détecteur (19).

6. Appareil de commande d'une pompe selon la revendication 3, caractérisé en ce que le commutateur est un relais (K1) comportant des éléments de contact mécaniques (K1'), et en ce que le circuit de commande de commutateur comprend une minuterie de calage (5) destinée à retarder momentanément le fonctionnement du détecteur de sous-intensité (7) pendant une période de temps suffisante pour permettre aux éléments de contact mécaniques (K1') du commutateur de venir en contact et de fermer ainsi le circuit d'alimentation de puissance de la pompe (PM) à la suite du signal "marche" de la minuterie d'intervalle (1).

7. Appareil de commande d'une pompe selon la revendication 3, caractérisé en ce que le détecteur de sous-intensité (7) compare un signal de tension provenant de la résistance de détecteur (19), à une tension de référence appliquée au détecteur, et en ce que cette tension de référence est une fonction de l'état de l'alimentation de puissance du moteur.

8. Appareil de commande d'une pompe selon la revendication 4, caractérisé en ce que le détecteur de surintensité (9) compare un signal de tension provenant de la résistance de détecteur (19), à une tension de référence appliquée à ce détecteur, et en ce que cette tension de référence est une fonction de l'état de l'alimentation de puissance du moteur.

9. Appareil de pompe/commande de pompe comprenant une pompe à commande électrique et l'appareil de commande de pompe selon l'une quelconque des revendications 1 à 8, caractérisé en ce que l'appareil de commande de la pompe est un élément distinct séparé de la pompe et placé à une certaine distance de celle-ci.

10. Appareil de pompe/commande de pompe comprenant une pompe à commande électrique et l'appareil de commande de pompe selon l'une quelconque des revendications 1 à 8, caractérisé en ce que l'appareil de commande de la pompe est physiquement intégré à la pompe.

11. Procédé de commande d'un appareil de pompe électrique, ce procédé consistant à :
a) fermer le circuit d'alimentation de puissance du moteur de l'appareil de pompe à un intervalle de temps présélectionné;
b) surveiller un état électrique du circuit d'alimentation de puissance pendant tout le cycle de pompage de la pompe, cet état électrique correspondant à la charge de pompage de la pompe; et
c) ouvrir le circuit d'alimentation de puissance lorsque se produit une variation de l'état électrique surveillé indiquant une réduction de la charge de pompage et l'apparition d'un manque de liquide à la pompe;

8

EP 0 205 596 B1

procédé caractérisé en ce que l'intervalle de temps est un intervalle de temps constant qui n'est pas lié au fonctionnement de la pompe.

**Patentansprüche**

1. Pumpenregelungsgerät mit:
   (a) einem Schalter (K1[1]) zur Einfügung in den Speisestromschaltkreis eines Antriebsmotors (PM) einer elektrisch angetriebenen Pumpe für Flüssigkeiten;
   (b) einer Intervall-Zeitgebereinrichtung (1), die wirksam ist, um ein "Ein"-Signal in einem vorgewählten Zeitintervall zu liefern;
   (c) einer in dem Speisestromschaltkreis der Pumpe enthaltenen Einrichtung, die eine den elektrischen Zustand fühlenden Einrichtung (19) aufweist, um den elektrischen Zustand des Speisestromschaltkreises in Abhängigkeit von der Pumpenbelastung zu überwachen und das "Aus"-Signal als Antwort auf eine gefühlte Änderung des elektrischen Zustandes des Pumpenantriebsmotors beim Ausbleiben von Pumpflüssigkeit zu liefern, wobei das Netzteil ferner folgendes beinhaltet:
   (d) einen Schaltsteuerkreis (2, 4, 6, 8, 10, 20 22, 26), der mit (a), (b) und der den elektrischen Zustand fühlenden Einrichtung (19) jeweils in Verbindung steht, wobei der Schaltkreis auf das "Ein"-Signal des Intervall-Zeitgebers (1) von (b) ansprechen kann, um den Schalter (K1[1]) in jedem Zeitintervall zu schließen, und auf das "Aus"-Signal der den elektrischen Zustand fühlenden Einrichtung (19) ansprechen kann, um den Schalter (K1[1]) zu öffnen,
   dadurch gekennzeichnet, daß die Intervall-Zeitgebereinrichtung (1) ein "Ein"-Signal in einem konstanten Zeitintervall unabhängig davon liefert, ob die Pumpe in dem Zeitpunkt arbeitet.

2. Pumpenregelungsgerät nach Anspruch 1, bei welchem die den elektrischen Zustand fühlende Einrichtung von (c) ein Sensorwiderstand (19) ist, und der damit gefühlte elektrische Zustand Strom ist.

3. Pumpenregelungsgerät nach Anspruch 2, bei welchem der Schaltsteuerkreis von (d) einen Unterstromdetektor (7) beinhaltet, um ein Unterstromsignal "Aus" des Sensorwiderstands (19) zu fühlen, wobei der Unterstromdetektor (7) bewirken kann, daß sich der Schalter (K1[1]) öffnet.

4. Pumpenregelungsgerät nach Anspruch 2, bei welchem der Schaltsteuerkreis von (d) einen Überstromdetektor (9) beinhaltet, um ein Überstromsignal des Widerstands (19) zu fühlen, wobei der Überstromdetektor (9) bewirken kann, daß sich der Schalter (K1[1]) öffnet.

5. Pumpenregelungsgerät nach einem der Ansprüche 2, 3 oder 4, bei welchem der Schaltsteuerkreis von (d) eine Pufferstufe (21) beinhaltet, um elektrisches Rauschen aus der Signalausgabe des Sensorwiderstands (19) herauszufiltern.

6. Pumpenregelungsgerät nach Anspruch 3, bei welchem der Schalter ein Relais (K1) ist, das mechanische Kontaktelemente (K1[1]) hat, und der Schaltsteuerkreis einen Klemmzeitgeber (5) beinhaltet, welcher den Betrieb des Unterstromdetektors (7) um eine Zeitspanne zeitweilig hinausschieben kann, die ausreichend ist, um es den mechanischen Kontaktelementen (K1[1]) des Schalters zu gestatten, Kontakt herzustellen und dadurch den Speisestromkreis der Pumpe (PM) auf das "Ein"-Signaö des Intervall-Zeitgebers (1) hin zu schließen.

7. Pumpenregelungsgerät nach Anspruch 3, bei welchem der Unterstromdetektor (7) ein Spannungssignal von dem Sensorwiderstand (19) mit einer Bezugsspannung vergleicht, die an den Detektor angelegt wird, und bei welchem die Bezugsspannung eine Funktion des Zustandes des Antriebsmotornetzteiles ist.

8. Pumpenregelungsgerät nach Anspruch 4, bei welchem der Überstromdetektor (9) ein Spannungssignal von dem Sensorwiderstand (19) mit einer Bezugsspannung vergleicht, die an den Detektor angelegt wird, und bei welchem die Bezugsspannung eine Funktion des Zustandes des Antriebsmotornetzteiles ist.

9. Kombination aus Pumpe und Pumpenregelungsgerät mit einer elektrisch angetriebenen Pumpe und dem Pumpenregelungsgerät nach einem der Ansprüche 1 bis 8, bei welcher das Pumpenregelungsgerät ein von der Pumpe getrenntes Bauteil und fern von ihr angeordnet ist.

9

**10.** Kombination aus Pumpe und Pumpenregelungsgerät mit einer elektrisch angetriebenen Pumpe und dem Pumpenregelungsgerät nach einem der Ansprüche 1 bis 8, bei welcher das Pumpenregelungsgerät in die Pumpe integriert ist.

**11.** Verfahren zum Regeln einer elektrisch angetriebenen Pumpe, das folgendes aufweist:

(a) Schließen des Speisestromkreises des Antriebsmotors der Pumpe in einem vorgewählten Zeitintervall;

(b) Überwachen eines elektrischen Zustands des Speisestromkreises während des Pumpzykluses der Pumpe, wobei der elektrische Zustand abhängig von der Pumpbelastung der Pumpe ist; und

(c) bei einer Änderung des überwachten elektrischen Zustandes, der eine Verringerung in der Pumpenbelastung und den Beginn des Trockenlaufs der Pumpe signalisiert, Öffnen des Speisestromkreises;

dadurch gekennzeichnet, daß das Zeitintervall ein konstantes Zeitintervall ist, das nicht auf den Betrieb der Pumpe bezogen ist.

EP 0 205 596 B1